# EUROPÄISCHE PATENTANMELDUNG

(11) **EP 4 043 644 A1**
(43) Veröffentlichungstag der Anmeldung: **17.08.2022**
(21) Anmeldenummer: 22155564.2
(22) Anmeldetag: 08.02.2022
(51) Int. Cl.: E02F 9/16, B62D 33/06

(54) **BEDIENERKABINE MIT SCHUTZGITTER**

(30) Priorität: 12.02.2021 DE 102021103321
(71) Anmelder: Liebherr-France SAS, 68005 Colmar Cedex (FR)
(72) Erfinder: THAL, Fabrice, 67350 Ettendorf (FR); SABATY-CUGNETTI, Aurélien, 67800 Hoenheim (FR); DISSER, Jérôme, 68320 Bischwihr (FR)
(74) Vertreter: Laufhütte, Dieter

(57) **Zusammenfassung**

Die Erfindung betrifft eine Bedienerkabine einer Arbeitsmaschine, insbesondere einer ERdbewegungsmaschine, umfassend: eine Gehäusestruktur, die einen Arbeitsplatz für einen Bediener der Arbeitsmaschine umgibt, eine Frontscheibe an einer Fronseite der Bedienerkabine, ein Frontgitter, das in seiner Schutzstellung vor der Frontscheibe platziert ist, und ein Dachgitter, das in seiner Schutzstellung oberhalb eines Dachabschnitts der Bedienerkabine platziert ist. Die Bedienerkabine ist dadurch gekennzeichnet, dass das Frontgitter und das Dachgitter durch eine rotatorische und/oder translatorische Bewegung aus ihrer jeweiligen Schutzstellung verbringbar sind.

## Beschreibung

Die vorliegende Erfindung betrifft eine Bedienerkabine mit einem Schutzgitter, insbesondere für Bedienerkabinen von Arbeitsmaschinen wie Erdbewegungsmaschinen oder dergleichen.

Bei vielen Arbeitsmaschinen ist es erforderlich, die Bedienerkabine zusätzlich mit Schutzgittern zu verstärken, damit die Sicherheit eines in der Bedienerkabine sitzenden Bedieners auch im Falle eines Auftreffens von herabfallenden, hochgeschleuderten Objekten oder einem sonstigen Unfall bestmöglich gewährleistet ist. Insbesondere unter widrigen Einsatzbedingungen kann es vorkommen, dass größere Gesteinsbrocken oder dergleichen herabfallen, so dass es zu einer Gefährdung des Bedieners kommen kann.

Aus diesem Grund ist es im Stand der Technik üblich, Schutzgitter vor der Frontscheibe und im Dachbereich einer Bedienerkabine anzuordnen, die im vorgenannten Fall zusätzlichen Schutz für den Bediener in der Bedienerkabine gewährleisten.

Die Schutzgitter an der Fronseite und im Dachbereich sind jedoch in einigen Situationen nachteilhaft, da bspw. das vor der Frontscheibe angeordnete Frontgitter die Sicht des Bedieners bei der Betätigung der Arbeitsmaschine behindert. Insbesondere für Tätigkeiten, die in einem ungefährlichen Umfeld stattfinden und eine sehr gute Sicht erfordern, ist es daher üblich, dass das Frontgitter demontiert wird. In der Regel ist dabei auch das Dachgitter demontierbar ausgeführt, da dieses bei einem Transport der Arbeitsmaschine die Aufbauhöhe unnötig steigert und ein Verladen der Arbeitsmaschine unnötig verkompliziert.

Problematisch an einer Demontage oder einer Montage eines Schutzgitters ist, dass dabei immer beachtliche Ressourcen vonnöten sind. So erfordert der Wechsel in der Schutzgitterkonfiguration typischerweise auch einen Kran oder eine Zugwinde, mit der man das mindestens eine Schutzgitter von der Bedienerkabine abheben oder an diese Heranführen kann. Zudem stellt dies eine zeitaufwändige und gefährliche Tätigkeit dar, da diese an der Außenseite der Bedienerkabine in einer Höhe von mehreren Metern durchgeführt werden muss. Auch passieren beim An- oder Abbauen von Schutzgittern oftmals kleinere Kollisionen mit der Bedienerkabine oder daran angebauten Bestandteilen, so dass der gewünschte Wechsel einer Schutzgitterkonfiguration eine Vielzahl von Nachteilen mit sich bringt. So sind außerdem die abgebauten Gitter an einem von der Arbeitsmaschine separaten Ort zu verwahren, so dass bei einer gewünschten Umkonfiguration die Gitter zunächst geholt werden müssen.

Es ist das Ziel der vorliegenden Erfindung, die oben aufgeführten Nachteile zu überwinden und eine diesbezüglich verbesserte mit mindestens einem Schutzgitter versehene Bedienerkabine zu schaffen.

Dies gelingt mit einer Bedienerkabine einer Arbeitsmaschine, die sämtliche Merkmale des Anspruchs 1 aufweist. Weitere vorteilhafte Konfigurationen sind dabei in den abhängigen Ansprüchen und der Erläuterung der Ansprüche in der Beschreibung enthalten.

Nach Anspruch 1 ist demnach eine Bedienerkabine für eine Arbeitsmaschine, insbesondere eine Erdbewegungsmaschine, vorgesehen, die eine Gehäusestruktur, die einen Arbeitsplatz für einen Bediener umgibt, eine Frontscheibe an einer Fronseite der Bedienerkabine, ein Frontgitter, das in seiner Schutzstellung vor der Frontscheibe platziert ist, und ein optional vorsehbares Dachgitter, das in seiner Schutzstellung oberhalb eines Dachabschnitts der Bedienerkabine platziert ist, umfasst, wobei das Frontgitter und/oder das Dachgitter durch eine rotatorische und/oder translatorische Bewegung aus ihrer jeweiligen Schutzstellung verbringbar ist/sind und dabei dennoch mit der Bedienerkabine verbunden bleibt/bleiben.

Nach der Erfindung ist eine Bedienerkabine möglich, die mit einem Dachgitter und einem Frontgitter versehen ist, welche beide aus ihrer jeweiligen Schutzstellung verbringbar sind. Dadurch kann bspw. die Verladehöhe der Bedienerkabine oder der damit verbunden Arbeitsmaschine verringert werden, da auch das Dachgitter aus seiner Schutzstellung beförderbar ist.

Dabei bleibt das Gitter oder bleiben die Gitter mit der Bedienerkabine in Verbindung, wobei dies über eine Anlenkung eines Gitters an einer Rotationsachse, bspw. über eine scharnierartige ein oder mehrdimensionale Verbindung, über eine Schienenverbindung oder eine ähnliche dem Fachmann bekannte Verbindung, bspw. Kugelgelenksverbindung o. ä., ausgeführt wird, die eine Relativbewegung der beiden Verbindungspartner zueinander erlaubt.

Nach einer vorteilhaften Konfiguration der Erfindung kann vorgesehen sein, dass das Frontgitter und das Schutzgitter eine im Wesentlichen gleichartige strukturelle Seitenkontur oder gar einen gleichartigen strukturellen Aufbau aufweisen, der ein Stapeln der beiden Gitter übereinander ermöglicht, also stapelbar zueinander sind. Dies bringt diverse Vorteile bei dem Verbringen des oder der Schutzgitter aus einer zugehörigen Schutzposition mit sich. Dabei kann unter anderem vorgesehen sein, dass die mehreren Schutzgitter an der Bedienerkabine identische oder nahezu identische Abmessungen in ihrer Breite aufweisen, so dass übereinander gestapelte Schutzgitter den zur Verfügung stehenden Raum effektiv nutzen. Stapelbar bedeutet im Sinne der Erfindung, dass die beiden Gitter eine hochgradig ähnliche Seitenkontur aufweisen, die ein platzsparendes Aufeinanderlegen der beiden Gitter ermöglicht. Es kann auch vorgesehen sein, dass die Gitter identisch sind, wobei der Anlenkabschnitt an einer Rotationsachse dabei verschieden sein kann.

Nach einer weiteren Modifikation der vorliegenden Erfindung kann vorgesehen sein, dass das Frontgitter und das Dachgitter über eine gemeinsame Rotationsachse aus ihrer jeweiligen Schutzstellung verschwenkbar sind, so dass das aus seiner Schutzstellung verschwenkte Gitter sich an das in seiner Schutzstellung verbleibende Gitter an dessen zur Bedienerkabine abgewandten Seite anlegt.

Alternativ oder zusätzlich dazu kann vorgesehen sein, dass das Überführen des einen Gitters an die zur Bedienerkabine abgewandten Seite des anderen Gitters über ein Schienen- oder Schlittensystem erfolgt, bei der die Bewegung eine an die Kontur der Bedienerkabine angepasste krummlinige Bewegung ist.

Nach einer weiteren Modifikation der Erfindung kann vorgesehen sein, dass das Frontgitter durch Rotation um eine in Breitenrichtung der Bedienerkabine verlaufende Rotationsachse und eine translatorische Bewegung in eine Position verbringbar ist, in der das Frontgitter an das in seiner Schutzstellung befindliche Dachgitter an dessen zur Bedienerkabine abgewandten Seite anlegbar ist, wobei vorzugsweise das in seiner Schutzstellung befindliche Frontgitter dazu ausgelegt ist, zunächst eine translatorische Bewegung zu erfahren und sich im Anschluss durch eine Rotationsbewegung an die zur Bedienerkabine abgewandte Seite des Dachgitters anlegt oder dazu ausgelegt ist, zunächst eine Rotationsbewegung zu erfahren und sich im Anschluss durch eine translatorische Bewegung an die zur Bedienerkabine abgewandte Seite des Dachgitters anlegt.

Weiter kann auch vorgesehen sein, dass zunächst eine Rotation des Frontgitters, eine nachfolgende Verschiebung, also Translation, und abschließend eine nochmalige Rotation vorgesehen ist, die zum Anlegen auf der Oberseite des in der Schutzstellung angeordneten Dachgitters führt.

Vorzugsweise ist vorgesehen, dass das aus seiner Schutzstellung bewegte Frontgitter, das an der zur Bedienerkabine abgewandten Seite des am Dachabschnitt angeordneten Dachgitters angeordnet ist, zusammen mit dem Dachgitter mittels einer gemeinsamen rotatorischen und/oder gemeinsamen translatorischen Bewegung von dem Dachabschnitt weg hin zu einer hinteren, linken oder rechten Seite der Kabine bewegbar ist.

Dabei kann vorgesehen sein, dass das in seiner Schutzstellung befindliche Dachgitter zusammen mit dem darüber angeordneten Frontgitter über eine zur Längsrichtung der Bedienerkabine parallel verlaufende Rotationsachse zur linken oder rechten Seite der Bedienerkabine bewegbar ist, wobei vorzugsweise die übereinander gelegten Gitter dabei um etwa 250° bis 280°, vorzugsweise 260° bis 270° aus der Schutzstellung des Dachgitters um die zur Längsrichtung der Bedienerkabine parallel verlaufende Rotationsachse rotiert sind.

Demzufolge ist die Bedienerkabine dazu ausgelegt, dass die übereinander am Dachabschnitt angeordneten Gitter (Frontgitter und Dachgitter) gemeinsam über eine Drehgelenksverbindung mit der Kabine zu einer ihrer Seitenflächen verschwenkbar sind, so dass die beiden Gitter von oberhalb der Dachkonstruktion der Bedienerkabine zu einer Seite hin verbringbar sind und somit die Gesamthöhe der Bedienerkabine verringerbar ist.

Ferner kann nach einer optionalen Fortbildung der Erfindung vorgesehen sein, dass das in seiner Schutzstellung befindliche Dachgitter zusammen mit dem darüber angeordneten Frontgitter durch gemeinsame Rotation um eine in Breitenrichtung der Bedienerkabine verlaufende Rotationsachse und eine translatorische Bewegung in eine Position verbringbar ist, in der die beiden Gitter hinter der Bedienerkabine angeordnet sind, wobei vorzugsweise die beiden oberhalb des Dachabschnitts angeordneten Gitter zunächst eine translatorische Bewegung erfahren und sich im Anschluss durch eine Rotationsbewegung an die der Frontseite gegenüberstehenden Hinterseite der Bedienerkabine anlegen oder die beiden oberhalb des Dachabschnitts angeordneten Gitter zunächst eine Rotationsbewegung erfahren und sich im Anschluss durch eine translatorische Bewegung an die der Frontseite gegenüberstehenden Hinterseite der Bedienerkabine anlegen.

So können die beiden auf dem Dach der Bedienerkabine übereinander angeordneten Schutzgitter durch einer im hinteren Bereichs des Dachs vorgesehene scharnierartige Verbindung zur Kabine zu deren Hinterseite verschwenkt werden, so dass die Gitterflächen etwa senkrecht zur Horizontalen, bzw. parallel zur Hinterseite der Bedienerkabine ausgerichtet sind. Diese Aufnahmeposition erlaubt auch eine Verringerung der Gesamthöhe der Bedienerkabine.

Weiter kann vorgesehen sein, dass das in seiner Schutzstellung befindliche Dachgitter zusammen mit dem darüber angeordneten Frontgitter durch eine gemeinsame Parallelogrammlenkung in einen hinter der Bedienerkabine angeordneten Bereich beförderbar ist. So können die beiden übereinander angeordneten Gitter auch unter Beibehaltung ihrer zur Horizontalen in etwa parallelen Ausrichtung auf eine hinter der Bedienerkabine vorgesehene Ablagefläche abgelegt werden. Dazu können entsprechend an dem oder den Gittern angelenkte Parallelogrammlenker vorgesehen sein, die die gewünschte Bewegung der beiden Gitter gegenüber der Bedienerkabine ermöglichen.

Ferner kann nach einer optionalen Modifikation der Erfindung vorgesehen sein, dass das Dachgitter durch Rotation um eine in Breitenrichtung der Bedienerkabine verlaufende Rotationsachse und eine translatorische Bewegung in eine Position verbringbar ist, in der das Dachgitter sich an das in seiner Schutzstellung befindliche Frontgitter an dessen zur Bedienerkabine abgewandten Seite anlegt, wobei vorzugsweise das in seiner Schutzstellung befindliche Dachgitter zunächst eine translatorische Bewegung erfährt und sich im Anschluss durch eine Rotationsbewegung an die zur Bedienerkabine abgewandte Seite des Frontgitters anlegt oder das in seiner Schutzstellung befindliche Dachgitter zunächst eine Rotationsbewegung erfährt und sich im Anschluss durch eine translatorische Bewegung an die zur Bedienerkabine abgewandte Seite des Frontgitters anlegt. Weiter kann nach einer vorteilhaften Modifikation der Erfindung vorgesehen sein, dass das aus seiner Schutzstellung bewegte Dachgitter, das an der zur Bedienerkabine abgewandten Seite des an der Frontseite angeordneten Frontgitters angeordnet ist, zusammen mit dem Frontgitter mittels einer gemeinsamen rotatorischen und/oder gemeinsamen translatorischen Bewegung von dem Frontseite weg unter die Bedienerkabine bewegbar ist.

So kann hierbei das in seiner Schutzstellung befindliche Frontgitter zusammen mit dem davor angeordneten Dachgitter durch gemeinsame Rotation um eine in Breitenrichtung der Bedienerkabine verlaufende Rotationsachse und eine translatorische Bewegung in eine Position verbringbar sind, in der die beiden Gitter unter der Bedienerkabine, insbesondere direkt unter der Bedienerkabine, angeordnet sind, wobei vorzugsweise die beiden vor der Frontseite angeordneten Gitter zunächst eine Rotationsbewegung erfahren und sich im Anschluss durch eine translatorische Bewegung unter die Bedienerkabine einschiebbar sind.

In anderen Worten kann das Frontgitter mit dem davor angeordneten Dachgitter nach vorne unten weggeklappt werden, sodass eine Einschubbewegung in Richtung der Bedienerkabine vornehmbar ist, um die beiden Gitter in einen unterhalb der Bedienerkabine vorgesehenen Aufnahmeraum einzuschieben.

Nach der Erfindung kann ferner vorgesehen sein, dass das in seiner Schutzstellung befindliche Frontgitter zusammen mit dem davor angeordneten Dachgitter durch gemeinsame Rotation um eine in Breitenrichtung der Bedienerkabine verlaufende Rotationsachse in eine etwa horizontale Ausrichtung überführbar sind und anschließend in eine unterhalb der Bedienerkabine angeordnete Ausnehmung einschiebbar sind. Vorteilhafterweise ist die in Breitenrichtung der Bedienerkabine verlaufende Rotationsachse nahe oder unterhalb eines Bodenbereichs der Bedienerkabine angeordnet.

Nach einer weiteren optionalen Ausführung der Erfindung kann vorgesehen sein, dass das in seiner Schutzstellung befindliche Frontgitter über eine erste Rotationsachse von der Frontseite der Bedienerkabine nach unten wegklappbar ist, so dass es über eine nachfolgende eindimensionalen translatorische Bewegung in einen unter der Bedienerkabine angeordneten Aufnahmeraum einschiebbar ist, und/oder das in seiner Schutzstellung befindliche Dachgitter über eine zweite Rotationsachse von dem Dachabschnitt der Bedienerkabine nach hinten wegklappbar ist, so dass es über eine nachfolgende eindimensionalen translatorische Bewegung in einen hinter der Bedienerkabine angeordneten Aufnahmeraum einführbar ist, vorzugsweise wobei die Rotation eines jeweiligen Gitters um seine Rotationsachse einen Bereich von 70° bis 110°, bevorzugterweise 80° bis 100° einnimmt.

Demnach können die beiden Schutzgitter (Frontgitter und Dachgitter) auch in unterschiedliche Aufnahmebereiche aus ihrer jeweiligen Schutzstellung verbracht werden. So können der Aufnahmebereich für das Frontgitter unterhalb der Bedienerkabine und der Aufnahmebereich für das Dachgitter hinter der Bedienerkabine vorgesehen sein.

Nach einer Fortbildung der Erfindung kann ferner vorgesehen sein, dass die Bewegung des Frontgitters und/oder des Dachgitters durch einen Antrieb erfolgt, der vorzugsweise ein hydraulischer und/oder ein elektromotorischer Antrieb ist und zum Bewegen des Dach- und/oder Frontgitters dient. Dabei kann auch vorgesehen sein, dass der Antrieb von der Bedienerkabine aus betätigbar ist.

Die Erfindung betrifft ferner eine Arbeitsmaschine, insbesondere eine Erdbewegungsmaschine mit einer Bedienerkabine nach einem der vorhergehenden Ansprüche.

Weitere Vorteile, Merkmale und Einzelheiten der Erfindung werden aufgrund der nachfolgenden Figurenbeschreibung ersichtlich. Dabei zeigen:
- Fig. 1:: eine erste Ausführungsform der vorliegenden Erfindung,
- Fig. 2:: eine zweite Ausführungsform der vorliegenden Erfindung,
- Fig. 3:: eine dritte Ausführungsform der vorliegenden Erfindung,
- Fig. 4:: eine vierte Ausführungsform der vorliegenden Erfindung,
- Fig. 5:: ein Konfigurationswechsel des Frontgitters von einer Schutzstellung hin zu einer verbesserten Frontsichtbarkeit für das Frontgitter und einer Umstellung von einer Transportkonfiguration zu einer Schutzstellung für das Dachgitter,
- Fig. 6:: einen Wechsel von einem Frontsichtbarkeitsmodus hin zu einer Schutzstellung für das Frontgitter bzw. eine Umstellung von einer Schutzstellung hin zu einer Transportstellung für das Dachgitter,
- Fig. 7:: eine weitere Ausführungsform der vorliegenden Erfindung, bei der die beiden übereinandergelegten Gitter in einen Aufnahmeraum unterhalb der Bedienerkabine einschiebbar sind,
- Fig. 8:: eine weitere Ausführungsform, bei der die beiden Gitter parallel zu einer Höhenrichtung der Bedienerkabine an der Rückseite der Bedienerkabine verstaubar sind,
- Fig. 9:: eine weitere Ausführungsform zum Verstauen der beiden Gitter an einer Rückseite der Bedienerkabine,
- Fig. 10:: eine weitere Ausführungsform zum Verstauen der beiden Gitter an einer Rückseite der Bedienerkabine,
- Fig. 11:: eine weitere Ausführungsform zum Verstauen der beiden Gitter an unterschiedlichen Aufnahmeorten,
- Fig. 12:: eine weitere Ausführungsform für ein alternatives Verfahren des Frontgitters zum Anlegen an die Oberseite des Dachgitters, und
- Fig. 13:: eine weitere Ausführungsform mit einer krummlinigen Verfahrbewegung des Frontgitters zum Anlegen an der Oberseite des Dachgitters.

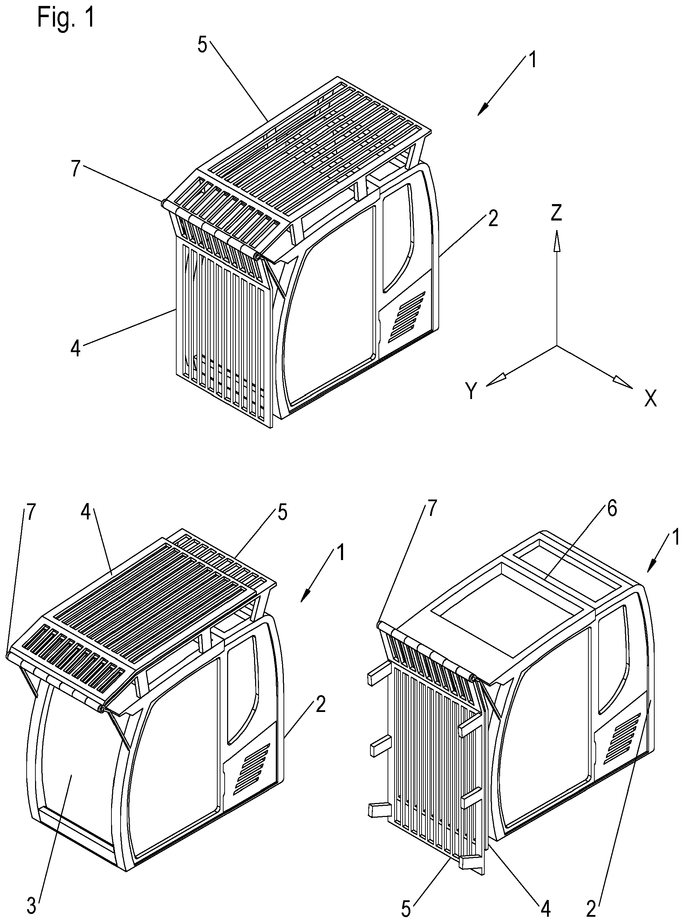

Fig. 1 zeigt eine perspektivische Ansicht einer Bedienerkabine 1 mit einer einen Arbeitsplatz für einen Bediener umgebenden Gehäusestruktur 2. Diese Gehäusestruktur 2 weist an ihrer linken und/oder ihrer rechten Seite typischerweise eine Zugangstüre auf, durch die der Bediener in die Bedienerkabine eintreten oder diese verlassen kann. An ihrer Frontseite weist die Gehäusestruktur 2 typischerweise eine Aufnahme 3 für eine Frontscheibe auf, durch welche der Bediener während eines Ausführens seiner Bedientätigkeit blicken kann. Beim Ausführen von gefährlichen Arbeiten, bei denen Gesteinsbrocken oder Teile von abzutragenden Gebäuden auf die Bedienerkabine herabfallen können, ist es zum Erhöhen der Sicherheit des Bedieners erforderlich, die Frontseite der Bedienerkabine mit einem Frontgitter 4 zu schützen. Selbiges gilt auch für den Dachabschnitt 6 der Bedienerkabine 2, der ebenfalls eine Ausnehmung für ein Dachfenster aufweisen kann. Damit wird es einem in der Bedienerkabine sitzenden Bediener ermöglicht, einen besonders guten Blick nach oben zu haben, so dass auch das Ausführen von anspruchsvollen Arbeitstätigkeiten der Arbeitsmaschine, beispielsweise das Abtragen von Gebäudeteilen mittels eines Abbruchbaggers ermöglicht wird. So ist es erforderlich, auch den Dachabschnitt mit einem Dachgitter 5 zu verstärken, so dass auch hier herabfallende Teile nicht zu einer Gefährdung eines in der Bedienerkabine befindlichen Bedieners führen.

Wie bereits im einleitenden Teil der vorliegenden Erfindung erläutert, ist das permanente Hindurchblicken durch das Frontgitter 4 anstrengend und vermindert zudem auch die Sichtbarkeit durch die Frontscheibe der Bedienerkabine 2. Daher ist es wünschenswert, wenn das Frontgitter 4 bei einem Ausführen von ungefährlichen Tätigkeiten, die den Zusatzschutz des Frontgitters 4 nicht erfordern, entfernbar ist. Vorliegend wird dies durch das Anlenken des Frontgitters an einer in der Breitenrichtung X der Bedienerkabine der laufenden Rotationsachse 7 ermöglicht, die eine Schwenkbewegung des Frontgitters 4 um etwa 270° ermöglicht, so dass das Frontgitter 4 wie in der in Fig. 1 unten links dargestellten Ansicht auf der Oberseite des Dachgitters 5 aufgelegt ist. Dadurch wird dem Bediener eine unverstellte Sicht durch die Frontscheibe der Bedienerkabine 2 ermöglicht, so dass auch Arbeiten problemlos durchgeführt werden können, die eine besonders gute Sicht erfordern und nicht gefährlich sind.

An derselben Rotationsachse 7, die ein Schwenken des Frontgitters 4 auf die Oberseite des Dachgitters 5 ermöglicht, ist auch das Dachgitter selbst 5 schwenkbar angeordnet. Kommt es nämlich zu einem Transport der Bedienerkabine bzw. der mit der Bedienerkabine verbundenen Arbeitsmaschine, ist es von großer Bedeutung, die Gesamthöhe der Arbeitsmaschine bzw. der Bedienerkabine zu verringern. So wird bei einem Verladen der Arbeitsmaschine bzw. der Bedienerkabine dafür gesorgt, dass die Transporthöhe minimiert ist und weniger Höhenbegrenzungen bei dem Transport der Arbeitsmaschine bzw. der Bedienerkabine beachtet werden müssen. Der Transportmodus der Bedienerkabine ist dabei in der unteren rechen Abbildung der Fig. 1 dargestellt. Man erkennt, dass ausgehend von der oberen Darstellung, in der sich beide Gitter 4, 5 in ihrer Schutzstellung befinden, das Dachgitter 5 über die gemeinsame Rotationsachse 7 vor das in Schutzstellung befindliche Frontgitter 4 geschwenkt worden ist. Dadurch vermindert sich die Höhe (Z-Richtung in dem Koordinatensystem der Fig. 1), so dass der Transport der Bedienerkabine 1 bzw. der damit verbundenen Arbeitsmaschine einfacher vonstattengehen kann. Der Wechsel von dem Frontsichtbarkeitsmodus, welcher in der Fig. 1 in der unteren, linken Darstellung gegeben ist, hin zu einem Transportmodus, der in der Fig. 1 in der rechten unteren Darstellung dargestellt ist, ist demnach einfach durch das Umschwenken der Gitter in die jeweilige Position zu bewerkstelligen.

Obwohl es nicht dargestellt ist, ist von der Erfindung auch das automatische Verfahren der Gitter in die jeweiligen Positionen umfasst. Hierzu kann eine Antriebsvorrichtung vorgesehen sein, die das Frontgitter 4 bzw. das Dachgitter 5 aus seiner jeweiligen Schutzstellung herausbewegt. Das Vorsehen einer gemeinsamen Rotations- bzw. Schwenkachse für die beiden Gitter, also das Dachgitter 5 und das Frontgitter 4, ermöglicht demnach eine besonders einfache Umsetzung zum Erreichung der Vorteile der vorliegenden Erfindung.

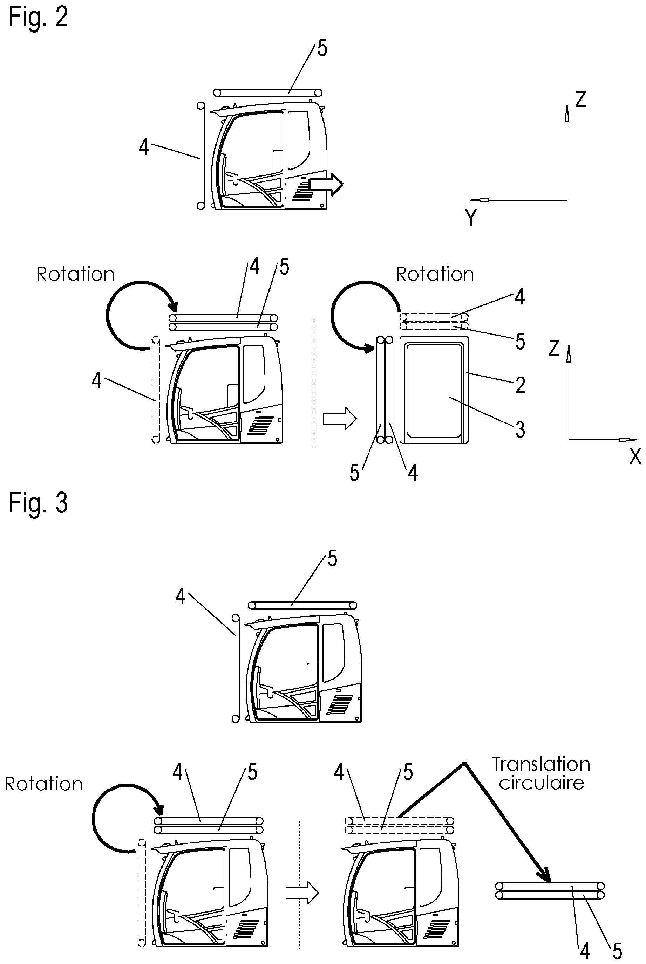

Fig. 2 zeigt eine weitere Ausgestaltung der vorliegenden Erfindung, bei der nach einem Schwenken des Frontgitters 4 auf die Oberseite des Dachgitters 5 die so übereinander gestapelten Gitter 4, 5 zur rechten Seite der Bedienerkabine 2 heruntergeklappt werden. So kann die Rotationsachse des Frontgitters 4 über einen Verbindungsabschnitt mit dem Dachgitter 5 hergestellt sein, wobei das Dachgitter 5 selbst über eine in Längsrichtung Y der Bedienerkabine verlaufende Rotationsachse verfügt, die an der Bedienerkabine 2 befestigt ist. Diese wird dazu benutzt, die beiden übereinander gestapelten Gitter 4, 5 um etwa 270° von dem Dachabschnitt 6 der Bedienerkabine 2 zu einem rechten Seitenabschnitt der Bedienerkabine 2 herabzuschwenken. Auch so ist es möglich, die Aufbauhöhe der Bedienerkabine für einen Transportmodus zu verringern und dabei gleichzeitig auch die Frontsichtbarkeit durch ein Wegklappen des Frontgitters 4 auf die von der Bedienerkabine 2 abgewandte Seite des Dachgitters 5 zu verbessern.

Fig. 3 zeigt eine weitere Ausführung der vorliegenden Erfindung, bei der das Frontgitter 4 wieder über eine in Breitenrichtung der Bedienerkabine 2 verlaufende Rotationsachse auf die Oberseite des Dachgitters 5 geschwenkt wird. In der übereinander gestapelten Konfiguration der beiden Gitter 4, 5 erfolgt nun eine Parallelogrammauslenkung, bei der die horizontale Ausrichtung der beiden übereinander gestapelten Gitter 4, 5 nicht verändert wird. So ist es möglich, die beiden Gitter 4, 5 in einen hinter der Bedienerkabine 2 vorgesehenen Aufnahmeort, beispielsweise eine Auflagefläche oder dergleichen abzulegen, so dass auch hier beide Betriebsmodi, der Frontsichtbarkeitsmodus wie auch der Transportmodus erreicht werden können, ohne dass es dabei zu einem finalen Abbauen der beiden Gitter 4, 5 von der Bedienerkabine kommt.

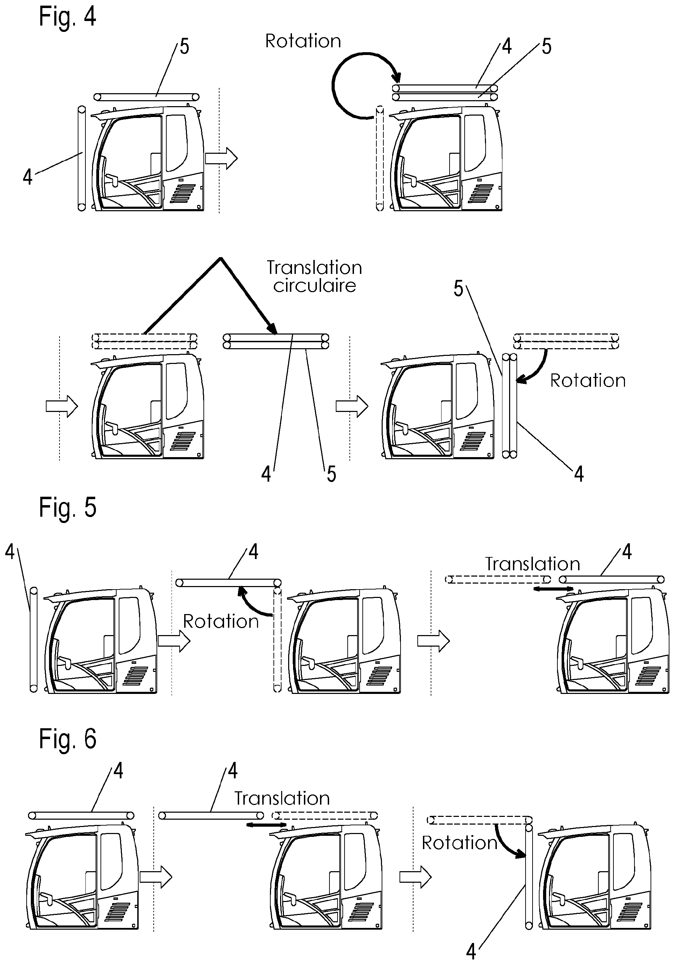

Fig. 4 zeigt eine weitere Ausführungsform der vorliegenden Erfindung, bei der erneut das Frontgitter 4, über eine in Breitenrichtung verlaufende Rotationsachse auf die Oberseite des Dachgitters 5 geschwenkt wird. Im Anschluss daran kommt es zu einer Parallelogrammumlenkung der beiden übereinander angeordneten Gitter, so dass diese nun nicht mehr oberhalb eines Dachabschnitts der Bedienerkabine angeordnet sind. Aus diesem Zustand erfolgt ein Hinschwenken zu einer Rückseite der Bedienerkabine 2, so dass die beiden Gitter nun etwa parallel zu der vormals eingenommen Schutzstellung des Frontgitters an der Rückseite der Bedienerkabine 2 angeordnet sind. Dies stellte eine besonders platzsparende Aufbewahrungsmöglichkeit der beiden Gitter dar.

Die Figuren 5 und 6 zeigen jeweils nur ein Gitter, wobei bei einem Vorhandensein von Frontgitter 4 wie auch Dachgitter 5, die Kinematik der Bewegung für beide Gitter 4, 5 identisch ist. Betrachtet man das in Fig. 5 dargestellte Gitter als Frontgitter 4, so befindet es sich in der linken Darstellung der Fig. 5 in seiner Schutzstellung. Durch Rotation um etwa 90° nach oben hin, befindet sich das Frontgitter 4 nun in einer etwa horizontalen Ausrichtung, so dass es durch eine translatorische Bewegung, bzw. einem Schieben in den Bereich oberhalb des Dachabschnitts 6 der Bedienerkabine 2 bewegbar ist. Ist das Gitter das Frontgitter, zeigt Fig. 5 also den Wechsel von der Schutzstellung des Frontgitters 4 in den Frontsichtbarkeitsmodus. Ist hingegen das in der Fig. 5 dargestellte Gitter das Dachgitter 5, wird der Wechsel von dem Transportmodus hin in die Schutzstellung des Dachgitters 5 gezeigt.

Fig. 6 zeigt erneut ein Gitter, das von dem Dachabschnitt 6 über eine Schiebebewegung nach vorne hin zur Bedienerkabine verschoben ist und durch ein nach Untenklappen gegenüber einer in Breitenrichtung der Bedienerkabine 2 verlaufenden Rotationsachse, die im oberen Bereich oder oberhalb der Bedienerkabine 2 angeordnet ist, vor die Frontseite der Bedienerkabine 2 klappbar ist. Für das Frontgitter ist dies der Übergang von dem Frontsichtbarkeitsmodus hin zur Schutzstellung. Ist das in Fig. 6 dargestellte Gitter jedoch das Dachgitter, ist dies der Übergang von der Schutzstellung hin zu einem Transportmodus.

Die Bewegung der beiden Gitter 4, 5 ist in den Fig. 5 und 6 jeweils identisch, so dass aus Gründen der besseren Übersichtlichkeit nur ein Gitter gezeigt worden ist. Die Erfindung umfasst jedoch auch den Fall, dass die Bedienerkabine lediglich eines der beiden Gitter aufweist.

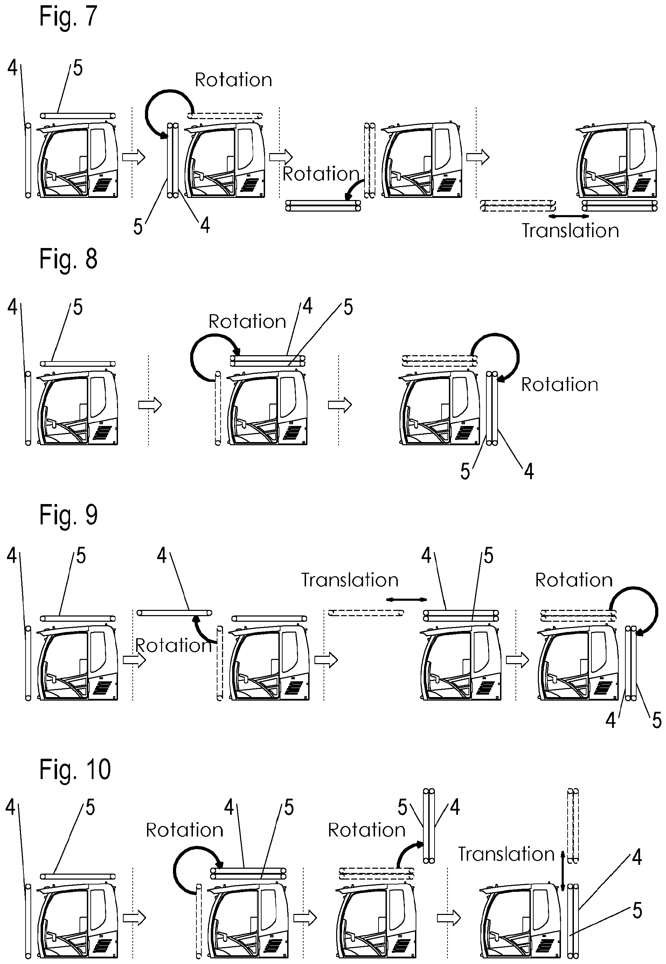

Fig. 7 zeigt eine weitere Ausführungsform der vorliegenden Erfindung, mit der in einem ersten Schritt nun nicht mehr das Dachgitter 5 in seiner Schutzstellung verbleibt, sondern das Dachgitter 5 vor das Frontgitter 4 über eine in der Breitenrichtung der Bedienerkabine verlaufenden Schwenkachse geschwenkt wird. Ist die Schwenkung erfolgt, kann ein Verschwenken der beiden nun parallel zueinander ausgerichteten Gitter 4, 5 über eine weitere Rotationsachse erfolgen, die ebenfalls in Breitenrichtung der Bedienerkabine 2 verläuft und im unteren Bereich der Bedienerkabine oder unter der Bedienerkabine angeordnet ist, so dass die beiden parallel angeordneten Gitter nach vorne unten wegklappen und vorzugsweise horizontal ausgerichtet sind. Befinden sie sich in einem nach vorne unten weggeklappten Zustand, können die beiden Gitter in einen unterhalb der Bedienerkabine angeordneten Aufnahmeraum eingeschoben werden. Beispielsweise kann die Kinematik der beiden Gitterbewegungen durch eine erste Scharnierverbindung von Dachgitter und Frontgitter 4 erfolgen, so dass das Dachgitter 5 an die Frontseite des Frontgitters 4 geschwenkt werden kann. Das Frontgitter selbst verfügt dann über eine Schwenkverbindung mit der Bedienerkabine im unteren Bereich, so dass die beiden parallel zueinander ausgerichteten Gitter 4, 5 gemeinsam nach unten vorne weggeschwenkt werden können. Über Schienen oder ein anderes Gleitsystem können die beiden Gitter dann in den unterhalb der Bedienerkabine angeordneten Aufnahmeraum eingeschoben werden.

Fig. 8 zeigt eine weitere Ausführungsform der vorliegenden Erfindung, bei der das Frontgitter 4 erneut über eine in Breitenrichtung der Bedienerkabine 2 verlaufende Rotationsachse auf die Oberseite des Dachgitters 5 geschwenkt wird. Eine weitere Rotation der beiden parallel ausgerichteten Gitter 4, 5 um etwa 270° führt dann zu einem Anlegen der beiden Gitter an der Rückseite der Bedienerkabine 2. Die Rotationsachsen können beispielsweise durch eine Scharnierverbindung zwischen Dachgitter 5 und Frontgitter 4 sowie eine Scharnierverbindung zwischen Dachgitter 5 und Bedienerkabine ausgeführt sein. Dem Fachmann ist auch klar, dass für ein gemeinsames Verschwenken von den beiden parallel zueinander ausgerichteten Gittern 4, 5 vorzugsweise Befestigungsmittel vorgesehen sein können, um ein unkontrolliertes Wegschwenken des Frontgitters 4 von dem Dachgitter 5 beim Umlegen auf die Rückseite der Bedienerkabine 2 zu verhindern.

Fig. 9 zeigt eine weitere Ausführungsform der vorliegenden Erfindung, bei der das Frontgitter nicht etwa durch eine Schwenkbewegung um 270° auf die Oberseite des Dachgitters 5 auflegbar ist, sondern in einem ersten Schritt lediglich um 90° nach oben vorne weggeklappt wird. Die Rotationsachse befindet sich dabei in einem vorderen oberen Abschnitt der Bedienerkabine 2 oder befindet sich oberhalb der Bedienerkabine 2 im vorderen Bereich. Ist in einem ersten Schritt das Frontgitter 4 nun horizontal ausgerichtet, kann über eine eindimensionale Translationsbewegung ein Stapeln von dem Frontgitter 4 auf dem Dachgitter 5 erfolgen. Das nachfolgende Umschwenken der beiden übereinander gestapelten Gitter 4, 5 hin zu einer Rückseite der Bedienerkabine 2 erfolgt dann wieder über eine Schwenkverbindung des Dachgitters 5 mit der Bedienerkabine 2.

Fig. 10 zeigt eine weitere Ausführungsform der vorliegenden Erfindung, bei der das Frontgitter 4 erneut über eine Rotation um 270° entlang einer in Breitenrichtung der Bedienerkabine 2 verlaufenden Rotationsachse auf die Oberseite des Dachgitters 5 geschwenkt wird. Nun erfolgt in Abweichung zur Fig. 9 keine Rotation der beiden übereinander gestapelten Gitter um 270°, sondern lediglich um 90°, so dass mit einer anschließenden eindimensionalen Translationsbewegung (die etwa senkrecht nach unten gerichtet ist) die beiden parallel zueinander ausgerichteten Gitter in einen rückwärtigen Aufnahmeabschnitt an der Rückseite der Bedienerkabine 2 einschiebbar sind.

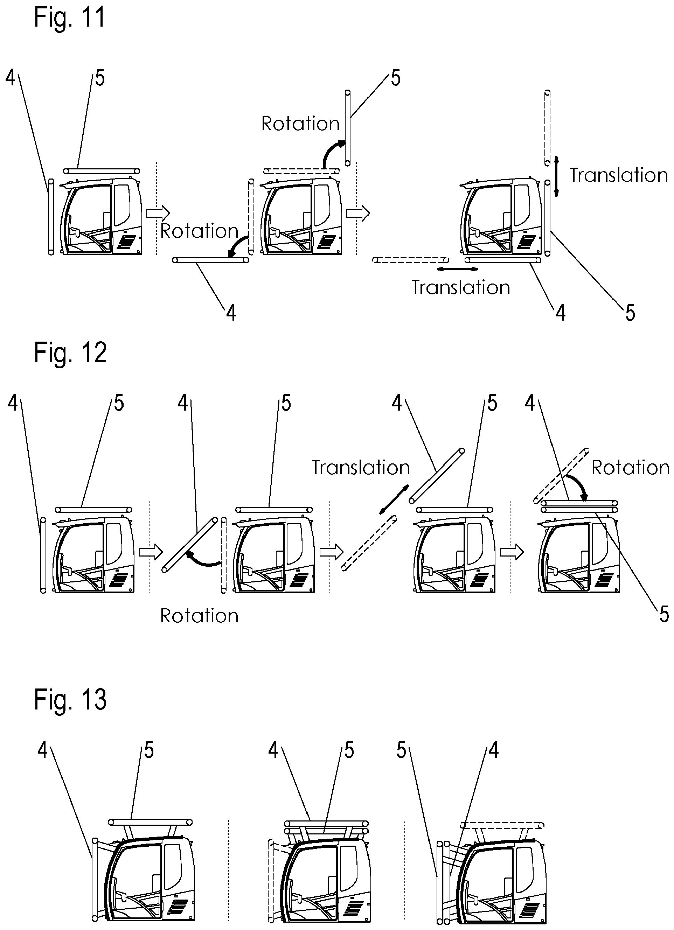

Fig. 11 zeigt eine weitere Ausführungsform der vorliegenden Erfindung, bei der die beiden Gitter 4, 5 nicht in einen gemeinsamen Aufnahmeraum bzw. in paralleler Ausrichtung zueinander verwahrt werden. Auf der linken Seite der Fig. 11 sieht man das Frontgitter 4 und das Dachgitter 5 in ihrer jeweiligen Schutzstellung. Jedes Gitter wird dabei über eine zur Breitenrichtung der Antriebskabine parallel verlaufende Rotationsachse aus seiner Schutzstellung weggeschwenkt. Die Rotationsachse des Frontgitters 4 verläuft dabei am unteren Bereich oder unterhalb der Bedienerkabine, wobei die Rotationsachse des Dachgitters 5 am hinteren oberen Bereich oder oberhalb der Bedienerkabine verläuft. Jedes der Gitter wird dabei um 90° aus seiner Schutzstellung geschwenkt, und in einem anschließenden Schritt unter bzw. hinter die Bedienerkabine verfahren. Demnach ist hier das getrennte Wegschwenken der jeweiligen Gitter aus ihrer Schutzstellung möglich, ohne dass dabei Einschränkungen für das andere Gitter vorhanden wären.

Fig. 12 zeigt eine weitere Ausführungsform zum Überführen des Frontgitters 4 auf die Oberseite des Dachgitters 5. Hierbei wird das Frontgitter um eine im oberen Bereich der Bedienerkabine quer zur Bedienerkabine der laufenden Rotationsachse um etwa 45° geschwenkt, sodann nach oben weggeschoben, dass das Frontgitter 4 weg zum Dachgitter 5 angeordnet ist und um 45° nach unten rotiert, so dass es an der Oberseite des Dachgitters 5 aufliegt. Dem Fachmann ist klar, dass der Wert von 45° nur exemplarischer Natur ist und auch andere Winkelwerte zu einer sinngemäßen Nutzung der Idee verwendet werden können. Entscheidend ist vorliegend lediglich die Klappbewegung, das darauffolgende eindimensionale Verschieben und das darauffolgende Herunterklappen des Frontgitters.

Die Fig. 13 zeigt eine weitere Ausführungsform der vorliegenden Erfindung, bei der jedes der beiden Gitter 4, 5 über ein Schienensystem mit der Bedienerkabine verbunden ist. Das Schienensystem verläuft dabei von dem Dachabschnitt 6 und erstreckt sich zum Frontabschnitt der Bedienerkabine 2. Beim Überführen eines Gitters aus seiner Schutzposition wird dabei eine Krummlinige Bewegung entlang eines Schlittens oder der Schienen in zwei Richtungen ausgeführt. Dabei kann vorgesehen sein, dass sowohl das Frontgitter 4 wie auch das Dachgitter 5 über ein separates Schienenpaar oder eine separate Schiene zum Bewegen des zugehörigen Gitters aufweisen.

## Patentansprüche

1. Bedienerkabine (1) für eine Arbeitsmaschine, insbesondere einer Erdbewegungsmaschine, umfassend:
eine Gehäusestruktur (2), die einen Arbeitsplatz für einen Bediener umgibt,
ein Frontgitter (4), das in seiner Schutzstellung vor einer Fronseite (3) der Bedienerkabine (1) platziert ist, und
ein optional vorsehbares Dachgitter (5), das in seiner Schutzstellung oberhalb eines Dachabschnitts (6) der Arbeitskabine (1) platziert ist,
**dadurch gekennzeichnet, dass**
das Frontgitter (4) und/oder das Dachgitter (5) durch eine rotatorische und/oder translatorische Bewegung aus ihrer jeweiligen Schutzstellung verbringbar ist/sind und dabei dennoch mit der Bedienerkabine (1) verbunden bleibt/bleiben.

2. Bedienerkabine (1) nach Anspruch 1, wobei das Frontgitter (4) und das Dachgitter (5) jeweils eine Form haben, die eine möglichst kompakte Verschachtelung ermöglichen, wobei sie vorzugsweise eine im Wesentlichen gleichartige strukturelle Seitenkontur aufweisen, die ein Stapeln der beiden Gitter (4, 5) übereinander ermöglicht.

3. Bedienerkabine (1) nach einem der vorhergehenden Ansprüche, wobei
das Frontgitter (4) und das Dachgitter (5) über eine gemeinsame Rotationsachse (7) aus ihrer jeweiligen Schutzstellung verschwenkbar sind, so dass das aus seiner Schutzstellung verschwenkte Gitter (4, 5) sich an das in seiner Schutzstellung verbleibende Gitter (4, 5) an dessen zur Bedienerkabine (1) abgewandten Seite anlegt.

4. Bedienerkabine (1) nach einem der vorhergehenden Ansprüche, wobei das Frontgitter (4) durch Rotation um eine in Breitenrichtung (X) der Bedienerkabine (1) verlaufende Rotationsachse und eine translatorische Bewegung in eine Position verbringbar ist, in der das Frontgitter (4) sich an das in seiner Schutzstellung befindliche Dachgitter (5) an dessen zur Bedienerkabine (1) abgewandten Seite anlegt, wobei vorzugsweise das in seiner Schutzstellung befindliche Frontgitter (4) zunächst eine translatorische Bewegung erfährt und sich im Anschluss durch eine Rotationsbewegung an die zur Bedienerkabine (1) abgewandte Seite des Dachgitters (5) anlegt oder das in seiner Schutzstellung befindliche Frontgitter (4) zunächst eine Rotationsbewegung erfährt und sich im Anschluss durch eine translatorische Bewegung an die zur Bedienerkabine (1) abgewandte Seite des Dachgitters (5) anlegt.

5. Bedienerkabine (1) nach einem der vorhergehenden Ansprüche, wobei das aus seiner Schutzstellung bewegte Frontgitter (4), das an der zur Bedienerkabine (1) abgewandten Seite des am Dachabschnitt (6) angeordneten Dachgitters (5) angeordnet ist, zusammen mit dem Dachgitter (5) mittels einer gemeinsamen rotatorischen und/oder gemeinsamen translatorischen Bewegung von dem Dachabschnitt (6) weg hin zu einer hinteren, linken oder rechten Seite der Bedienerkabine (1) bewegbar ist.

6. Bedienerkabine (1) nach Anspruch 5, wobei das in seiner Schutzstellung befindliche Dachgitter (5) zusammen mit dem darüber angeordneten Frontgitter (4) über eine zur Längsrichtung der Bedienerkabine (1) parallel verlaufende Rotationsachse zur linken oder rechten Seite der Bedienerkabine (1) bewegbar ist, wobei vorzugsweise die Gitter dabei um etwa 250° bis 280°, vorzugsweise 260° bis 270° aus der Schutzstellung des Dachgitters (5) um die zur Längsrichtung der Bedienerkabine (1) parallel verlaufende Rotationsachse rotiert sind.

7. Bedienerkabine (1) nach Anspruch 5, wobei das in seiner Schutzstellung befindliche Dachgitter (5) zusammen mit dem darüber angeordneten Frontgitter (4) durch gemeinsame Rotation um eine in Breitenrichtung (X) der Bedienerkabine (1) verlaufende Rotationsachse und eine translatorische Bewegung in eine Position verbringbar ist, in der die beiden Gitter hinter der Bedienerkabine (1) angeordnet sind, wobei vorzugsweise die beiden oberhalb des Dachabschnitts (6) angeordneten Gitter zunächst eine translatorische Bewegung erfahren und sich im Anschluss durch eine Rotationsbewegung an die der Frontseite gegenüberstehenden Hinterseite der Bedienerkabine (1) anlegen oder die beiden oberhalb des Dachabschnitts (6) angeordneten Gitter zunächst eine Rotationsbewegung erfahren und sich im Anschluss durch eine translatorische Bewegung an die der Frontseite gegenüberstehenden Hinterseite der Bedienerkabine (1) anlegen.

8. Bedienerkabine (1) nach Anspruch 5, wobei das in seiner Schutzstellung befindliche Dachgitter (5) zusammen mit dem darüber angeordneten Frontgitter (4) durch eine gemeinsame Parallelogrammauslenkung in einen hinter der Bedienerkabine (1) angeordneten Bereich beförderbar ist.

9. Bedienerkabine (1) nach einem der vorhergehenden Ansprüche, wobei das Dachgitter (5) durch Rotation um eine in Breitenrichtung der Bedienerkabine (1) verlaufende Rotationsachse und eine translatorische Bewegung in eine Position verbringbar ist, in der das Dachgitter (5) sich an das in seiner Schutzstellung befindliche Frontgitter (4) an dessen zur Bedienerkabine (1) abgewandten Seite anlegt, wobei vorzugsweise das in seiner Schutzstellung befindliche Dachgitter (5) zunächst eine translatorische Bewegung erfährt und sich im Anschluss durch eine Rotationsbewegung an die zur Bedienerkabine (1) abgewandte Seite des Frontgitters (4) anlegt oder das in seiner Schutzstellung befindliche Dachgitter (5) zunächst eine Rotationsbewegung erfährt und sich im Anschluss durch eine translatorische Bewegung an die zur Bedienerkabine (1) abgewandte Seite des Frontgitters (4) anlegt.

10. Bedienerkabine (1) nach einem der vorhergehenden Ansprüche 1 bis 4 oder 9, wobei das aus seiner Schutzstellung bewegte Dachgitter (5), das an der zur Bedienerkabine (1) abgewandten Seite des an der Frontseite angeordneten Frontgitters (4) angeordnet ist, zusammen mit dem Frontgitter (4) mittels einer gemeinsamen rotatorischen und/oder gemeinsamen translatorischen Bewegung von dem Frontseite weg unter die Bedienerkabine (1) bewegbar ist.

11. Bedienerkabine (1) nach Anspruch 10, wobei das in seiner Schutzstellung befindliche Frontgitter (4) zusammen mit dem davor angeordneten Dachgitter (5) durch gemeinsame Rotation um eine in Breitenrichtung der Bedienerkabine (1) verlaufende Rotationsachse und eine translatorische Bewegung in eine Position verbringbar sind, in der die beiden Gitter unter der Bedienerkabine (1), insbesondere direkt unter der Bedienerkabine (1), angeordnet sind, wobei vorzugsweise die beiden vor der Frontseite angeordneten Gitter zunächst eine Rotationsbewegung erfahren und sich im Anschluss durch eine translatorische Bewegung unter die Bedienerkabine (1) einschiebbar sind.

12. Bedienerkabine (1) nach Anspruch 11, das in seiner Schutzstellung befindliche Frontgitter (4) zusammen mit dem davor angeordneten Dachgitter (5) durch gemeinsame Rotation um eine in Breitenrichtung der Bedienerkabine (1) verlaufende Rotationsachse in eine etwa horizontale Ausrichtung überführbar sind und anschließend in eine unterhalb der Bedienerkabine (1) angeordnete Ausnehmung einschiebbar sind.

13. Bedienerkabine (1) nach einem der vorhergehenden Ansprüche, wobei
das in seiner Schutzstellung befindliche Frontgitter (4) über eine erste Rotationsachse von der Frontseite der Bedienerkabine (1) nach unten wegklappbar ist, so dass es über eine nachfolgende eindimensionalen translatorische Bewegung in einen unter der Bedienerkabine (1) angeordneten Aufnahmeraum einschiebbar ist, und/oder
das in seiner Schutzstellung befindliche Dachgitter (5) über eine zweite Rotationsachse von dem Dachabschnitt (6) der Bedienerkabine (1) nach hinten wegklappbar ist, so dass es über eine nachfolgende eindimensionalen translatorische Bewegung in einen hinter der Bedienerkabine (1) angeordneten Aufnahmeraum einführbar ist, vorzugsweise wobei die Rotation eines jeweiligen Gitters um seine Rotationsachse einen Bereich von 70° bis 110°, bevorzugterweise 80° bis 100° einnimmt.

14. Bedienerkabine (1) nach einem der vorhergehenden Anspruch, wobei die Bewegung des Frontgitters (4) und/oder des Dachgitters (5) durch einen Antrieb erfolgt, der von der Bedienerkabine (1) aus betätigbar ist, vorzugsweise wobei der Antrieb ein hydraulischer und/oder ein elektromotorischer Antrieb ist und zum Bewegen des Dach- und/oder Frontgitters (4) nutzbar ist.

15. Arbeitsmaschine, insbesondere Erdbewegungsmaschine mit einer Bedienerkabine (1) nach einem der vorhergehenden Ansprüche.
